# EUROPEAN PATENT SPECIFICATION

(11) **EP 2 580 450 B1**
(45) Date of publication and mention of the grant of the patent: **01.04.2020**
(21) Application number: 11729128.6
(22) Date of filing: 09.06.2011
(51) Int. Cl.: F02D 41/00, F02D 19/10

(54) **CONTROL OF AN INTERNAL COMBUSTION ENGINE**
STEUERUNG EINES VERBRENNUNGSMOTORS
COMMANDE D'UN MOTEUR À COMBUSTION INTERNE

(30) Priority: 11.06.2010 FI 20105668
(43) Date of publication of application: 17.04.2013
(73) Proprietor: Wärtsilä Finland Oy, 65100 Vaasa (FI)
(72) Inventor: FORS, Patrik, FI-65300 Vasa (FI); NYLUND, Daniel, FI-65610 Korsholm (FI); ÅSTRAND, Ulf, FI-65280 Vasa (FI); ÖSTMAN, Fredrik, FI-65100 Vaasa (FI)
(74) Representative: Berggren Oy, Helsinki & Oulu
(86) International application number: PCT/FI2011/050540
(87) International publication number: WO 2011/154609

(56) References cited:
- EP-A2- 2 000 655
- DE-A1-102008 004 078
- US-A1- 2007 125 321

## Description

### Field of technology

The present invention relates to a method of operating an internal combustion engine upon occurrence of abnormal combustion. The engine is capable of stepwise or continuously correcting combustion state through fuel regulation including fuel cut off, in order to execute stopping or output limit operation of the engine.

### Background art

For internal combustion engines, it is essential to avoid extreme operating points of the engine such as heavy knock and misfire. Heavy knock causes rapid pressure oscillations of excessive magnitudes which potentially lead to a total breakdown of mechanical components. Cylinder misfire again increases emissions significantly and is potentially harmful for catalysts. In addition, for gas engines it is essential to cut-off the fuel supply to a misfiring cylinder, as the gas otherwise flows to the exhaust-gas pipe and explodes.

A multiple cylinder gas engine or a multiple cylinder diesel engine for power generation incorporates a control for stopping the engine when abnormal combustion, for example heavy knock, occurs in one or more of cylinders.

In a conventional internal combustion engine, when continuous heavy knock occurs in one of cylinders in a normal operating condition, the supply of fuel into all cylinder are cut off so as to stop the engine after predetermined time elapses from the time of detection of the heavy knock. The engine merely comes to a stop after the detection of occurrence of heavy knock in order to protect the engine.

Patent document US 2007/125321 A1 discloses to temporarily interrupt the gaseous fuel flow in a dual-fuel fumigation engine to resume operation in full diesel mode to eliminate engine knocking. The gaseous fuel flow is then re-established based on the present operating conditions of the engine.
A patent document JP11093757A discloses solution to prevent the pre-ignition by detecting a knocking as the occurrence of a pre-ignition when the knocking is continued over a prescribed period regardless of the suppression of knocking by the control of fuel parameter when the knocking is detected, and reducing the output of the corresponding cylinder. In JP11093757, no consideration is made for detailed control for operation of fuel cut off of an engine upon occurrence of abnormal combustion.

WO 2008038827A1 discloses an operation method of an engine during abnormal combustion in which operation control of the engine can be performed appropriately after fuel supply interruption to a heavy knock-inflicted cylinder without stopping the engine immediately upon detection of occurrence of heavy knock. In WO 2008038827A1, no consideration is made for detailed control for operation of fuel cut off of an engine upon occurrence of abnormal combustion.

### Short description of invention

The objective of the invention is to reduce the problems of prior art. The objective will be achieved as presented in the independent claim.

Disclosed is a method for purpose of potentially hazardous situations, such as continuous heavy-knock or misfiring in internal combustion engine. Cut off of main fuel into one of the cylinders is executed based on measurements, such as cylinder pressures, cylinder knock and exhaust gas temperatures.

The invention concerns a method of operating an internal combustion engine with plurality of cylinders and an engine controller adjusting burning state of each cylinder through fuel regulation, including cut off of fuel, upon occurrence of abnormal combustion in cylinder. The method comprises setting a cylinder to a restricted injection state, where cutoff of main fuel in said cylinder is made, upon occurrence of abnormal combustion in said cylinder, and measuring exhaust gas temperature of the cylinder in restricted injection state, where cutoff of main fuel has been made. Main fuel injection is restored to the cylinder in restricted injection state if the measured exhaust gas temperature is within temperature range predetermined for said cylinder in restricted injection state. Burning state of said cylinder is determined by measuring exhaust gas temperature, cylinder pressure or other signal indicative of the combustion process, and the cylinder is set to the restricted injection state again by cutting off main fuel injection in said cylinder if no change is detected in the burning state of said cylinder for a given time period.

According to one aspect of the invention, the burning state value is determined for restricted injection state by measuring exhaust gas temperature.

According to one aspect of the invention, the restoring of main fuel injection is executed if measured exhaust gas temperature is within temperature range for a period of time predetermined for restricted injection state.

According to one aspect of the invention, the period of time predetermined for restricted injection state is dependent on number attempt of the restoration main fuel injection.

According to one aspect of the invention, the number attempts of the restoration main fuel injection is limited.

Second embodiment discloses a control method of operating an internal combustion engine with plurality of cylinders and an engine controller adjusting burning state of each cylinder through fuel regulation, including cut off of fuel, upon occurrence of abnormal combustion in cylinder. This embodiment is applicable to operate an internal combustion engine using liquid pilot fuel, which engine has a plurality of cylinders and engine controller capable of adjusting a burning state of each cylinder through fuel regulation, including fuel cut off, upon occurrence of abnormal combustion. Upon occurrence of abnormal combustion in a cylinder the fuel injection is kept partially active with a pilot fuel injected by pilot injector of said cylinder. The second embodiment is applicable independently or with first embodiment of the invention.

According to one aspect of the second embodiment, the burning state of the cylinder for which the cutoff of main fuel is detected and compared to burning state predetermined for amount of fuel injected by the pilot injection.

According to one aspect of the second embodiment, the amount of pilot fuel injected to the cylinder for which the cutoff of main fuel is made, is increased.

### List of figures

In the following, the invention is described in more detail by reference to the enclosed drawings, where:
Figure 1 illustrates an example of an internal combustion engine and an engine controller adjusting burning state of each cylinder through fuel regulation;
Figure 2 illustrates, where burning state of one the cylinders is regulated;
Figure 3 is a flowchart of an embodiment illustrating steps to determinate the need for fuel regulation;
Figure 4 is a flowchart illustrating steps to recover from fuel regulation;
Figure 5 is a flowchart of a second embodiment illustrating steps to determinate the need for fuel regulation; and
Figure 6 is a flowchart illustrating steps to recover from fuel regulation.

### Description of the figures

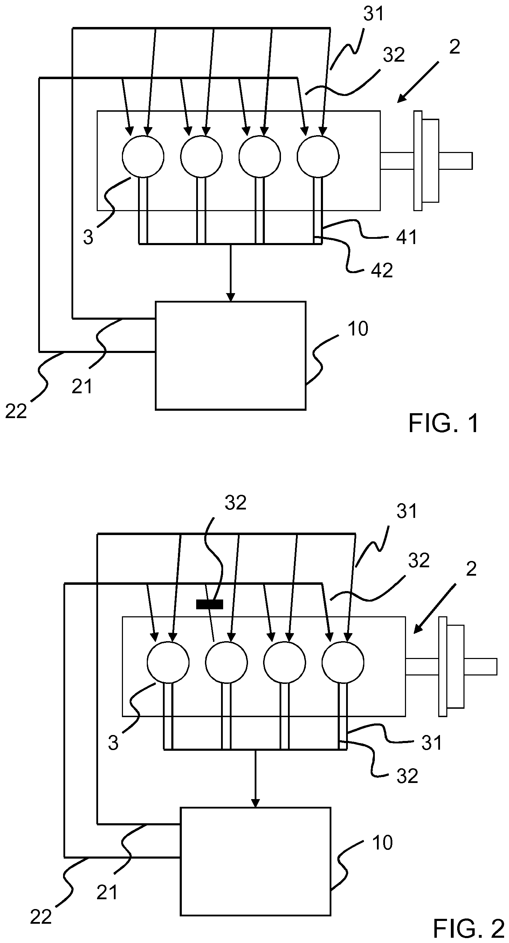

Internal combustion engine 2 of figure 1 has a plurality of cylinders 3, here four. A control device 10 regulates amount of fuel delivered to engine 2 with control signals 21 and 22. Control signal 21 controls ignition device or pilot fuel injector. Main fuel control signal 22 controls main fuel actuator 32.

Stopping of the fuel injection is activated based on measurements. The control device 10 receives measurement data relating to cylinders 3. Reference number 41 denotes exhaust gas temperature measurement and reference number 41 denote measurement of cylinder pressures (pressure sensor) and/or cylinder knock (accelerometer).

Figure 2 illustrates so-called cold cylinder operation (CCO), where one of the cylinders has been identified with poor cylinder performance (either heavy knock or total misfiring) and needs to be adjusted. Determination of poor cylinder performance is based on measurements 41, 42 of cylinder-wise cylinder pressures, cylinder knock (accelerometer) and/or exhaust-gas temperatures. Fuel injection to one of the cylinders 3 is restricted with respective main fuel actuator 32.

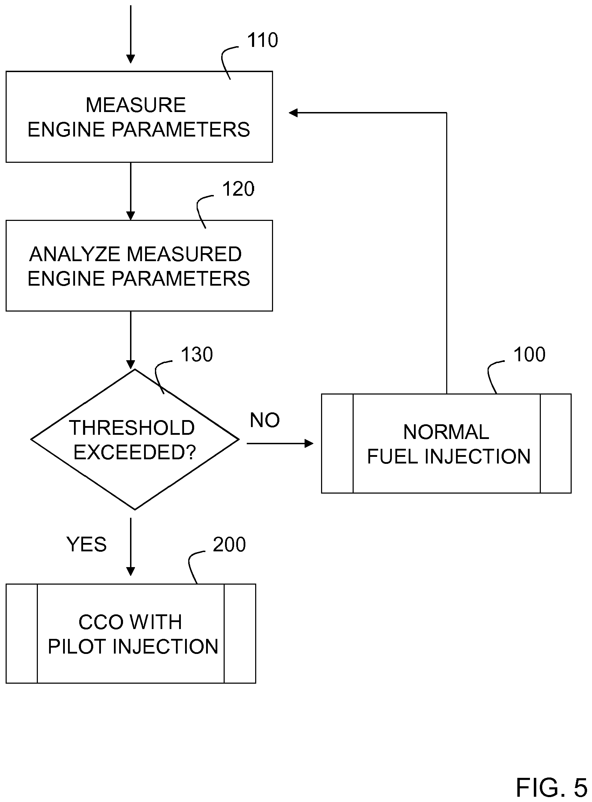

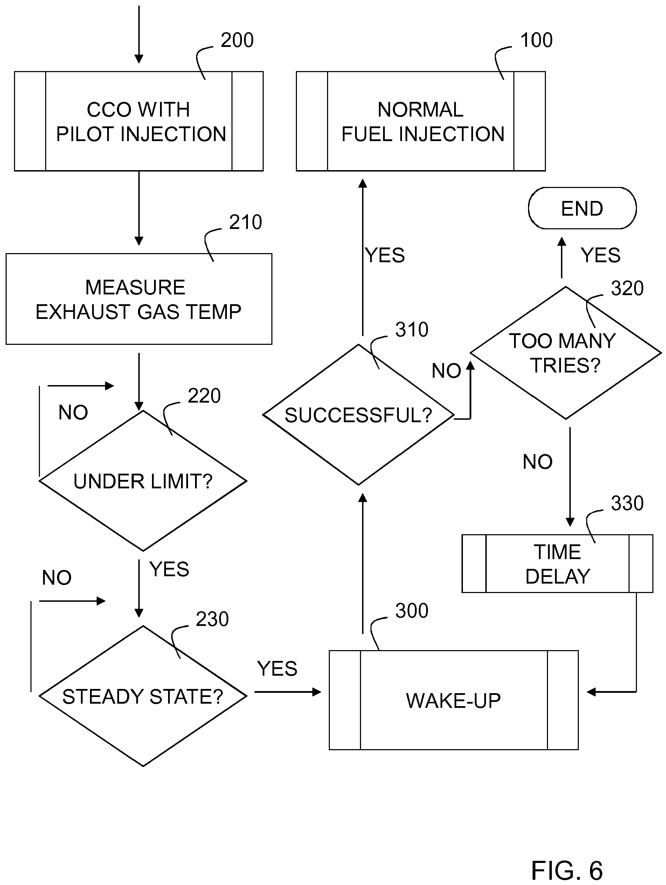

According to second embodiment (figures 5 and 6), the fuel injection is kept partially active with a fuel injected by pilot nozzle. Pilot-fuel injection is kept active, despite CCO, to maintain partial combustion in controlled cylinder. This has an advantage, especially in gaseous mode, to prevent excessive amounts of fuel flowing to the exhaust-gas pipe system during solenoid-valve malfunction.

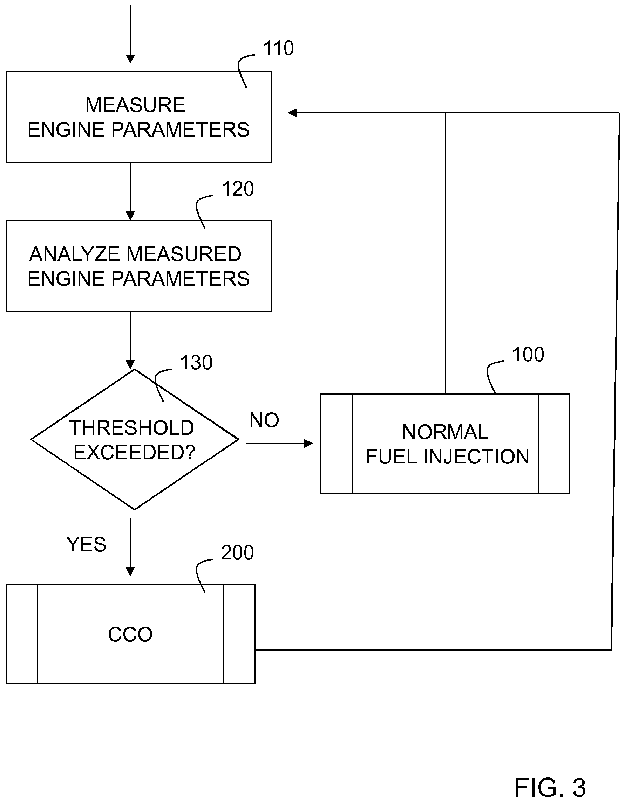

Figure 3 illustrates steps to determinate need for CCO state. Measured engine parameters in step 110 can be, for example cylinder-wise cylinder pressures, cylinder knock value and exhaust-gas temperatures.

Measured engine parameters are analyzed in step 120 to determine burning state of said cylinders. Occurrence of abnormal combustion in cylinder 3, i.e. poor cylinder performance can be determined by analyzing one or several measurements and comparing resulting value or values to predetermined threshold (step 130). Normal fuel injection (step 100) is continued if occurrence of abnormal combustion in cylinder 3 is not detected. Normal fuel injection (step 100) is stopped if occurrence of abnormal combustion in cylinder 3 is detected and fuel injection is controlled according to CCO state.

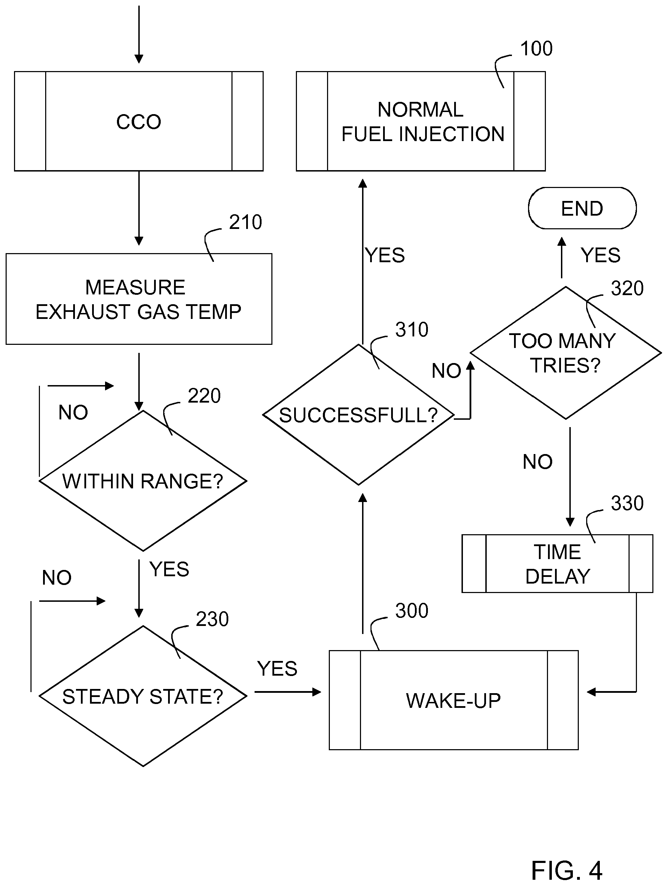

Figure 4 illustrates steps executed after cylinder has been set to CCO state (step 200 in figure 3). After cylinder has been set to CCO state, the exhaust-gas temperature of the cylinder in question is measured (step 210) and when the temperature is under a certain level or within certain predetermined range, it is determined (step 230) that cylinder has reaches steady-state. More preferably, steady-state of CCO cylinder is determined if the measured temperature reaches a given standard deviation or variance for a time window ti.

The fuel injection is restarted by wake-up procedure (step 300). If no change is detected in the exhaust-gas temperature, cylinder pressure or other signal indicative of the combustion process, has happened for a given time period t₂, the cylinder is again set to CCO state to prevent excessive leakage of fuel to the exhaust gas system.

If the exhaust-gas temperature increases during the wake-up attempt a given amount of degrees during t₂, the wake-up action is defined as successful and the cylinder is set in normal state (step 100).

The period of time (step 330) predetermined for restricted injection in CCO state is dependent on number attempt of the restoration main fuel injection. The number attempts of the restoration main fuel injection is limited (step 320). This has an advantage in that first attemp can be rather soon after CCO state and time between further attemps can extended and number of attemps can be limited.

Figure 5 illustrates steps to determinate need for CCO with pilot injection. Measured engine parameters in step 110 can be, for example cylinder-wise cylinder pressures, cylinder knock value and exhaust-gas temperatures.

Measured engine parameters are analyzed in step 120 to determine burning state of said cylinders. Occurrence of abnormal combustion in cylinder 3, i.e. poor cylinder performance can be determined by analyzing one or several measurements and comparing resulting value or values to predetermined threshold (step 130). Normal fuel injection (step 100) is continued if occurrence of abnormal combustion in cylinder 3 is not detected. Normal fuel injection (step 100) is stopped if occurrence of abnormal combustion in cylinder 3 is detected and fuel injection is controlled according to CCO with pilot injection state.

Figure 6 illustrates steps executed after cylinder has been set to CCO with pilot injection state (step 200 in figure 3). After cylinder has been set to CCO state, the exhaust-gas temperature of the cylinder in question is measured (step 210) and when the temperature is under a certain level or within certain predetermined range, it is determined (step 230) that cylinder has reaches steady-state. More preferably, steady-state of CCO with pilot injection cylinder is determined if the measured temperature reaches a given standard deviation or variance for a time window ti.

The fuel injection is restarted by wake-up procedure (step 300). If no change is detected in the exhaust-gas temperature, cylinder pressure or other signal indicative of the combustion process, has happened for a given time period t₂, the cylinder is again set to CCO with pilot injection state to prevent excessive leakage of fuel to the exhaust gas system.

If the exhaust-gas temperature increases during the wake-up attempt a given amount of degrees during t₂, the wake-up action is defined as successful and the cylinder is set in normal state (step 100).

The period of time (step 330) predetermined for restricted injection in CCO with pilot injection state is dependent on number attempt of the restoration main fuel injection. The number attempts of the restoration main fuel injection is limited (step 320). This has an advantage in that first attemp can be rather soon after CCO with pilot injection state and time between further attemps can extended and number of attemps can be limited.

The burning state of the cylinder for which the cutoff of main fuel is made is detected 110 and compared 130 to burning state predetermined for amount of fuel injected by the pilot nozzle. This way the effect of such amount of pilot fuel can be predetermined and resulting effect can be compared. Therefore, the success of closing of primary main fuel injection can be determined with increased certainty, because combustion of primary fuel can be identified.

The amount of pilot fuel injected to the cylinder 3 for which the cutoff of main fuel is made can also be increased. The amount of pilot fuel can be changed by control device. More pilot fuel means more effect and more liable determination of CCO cylinders output. Result is also less vibrations due to the control operation CCO of one cylinder. The effect of such increased amount can also be determined and resulting change in effect can be compared.

It is evident from the description and examples presented above that an embodiment of the invention can be created using a variety of different solutions. It is evident that the invention is not limited to the examples mentioned in this text but can be implemented in many other different embodiments. Therefore any inventive embodiment can be implemented within the scope of the independent claim.

## Claims

1. A method of operating an internal combustion engine using a main fuel, said engine (2) having a plurality of cylinders (3) and an engine controller (10) capable of adjusting a burning state of each cylinder through fuel regulation, including cut off of fuel, upon occurrence of abnormal combustion in a cylinder (3), the method comprising:
- setting a cylinder to a restricted injection state (200), where cutoff of main fuel in said cylinder (3) is made, upon occurrence of abnormal combustion in said cylinder (3);
- measuring exhaust gas temperature (210) of a cylinder in restricted injection state, where cutoff of main fuel in said cylinder has been made;
- restoring main fuel injection (300) to said cylinder in restricted injection state if the measured exhaust gas temperature is within temperature range predetermined for said cylinder in restricted injection state;
- measuring a burning state of said cylinder by measuring exhaust gas temperature, cylinder pressure or other signal indicative of the combustion process; and
- setting the cylinder to the restricted injection state again by cutting off main fuel injection in said cylinder if no change is detected in the burning state of said cylinder for a given time period.

2. A method according to claim 1, **characterised in that** the restoring of main fuel injection (300) is executed if measured exhaust gas temperature (210) is within temperature range for a period of time predetermined for restricted injection state.

3. A method according to claim 2, **characterised in that** the period of time (330) predetermined for restricted injection state is dependent on number attempt of the restoration main fuel injection.

4. A method according to claim 3, **characterised in that** the number attempts of the restoration main fuel injection is limited (320).

## Patentansprüche

1. Verfahren zum Betreiben einer Brennkraftmaschine unter Verwenden eines Hauptkraftstoffs, wobei die Maschine (2) eine Vielzahl von Zylindern (3) und eine Maschinensteuervorrichtung (10) umfasst, die fähig ist, einen Brennzustand jedes Zylinders durch Kraftstoffregulierung, einschließlich Abschalten des Kraftstoffs, beim Auftreten anormaler Verbrennung in einem Zylinder (3) einzustellen, wobei das Verfahren Folgendes umfasst:
- Einstellen eines Zylinders auf einen eingeschränkten Einspritzzustand (200), wobei das Abschalten des Hauptkraftstoffs in dem Zylinder (3) beim Auftreten anormaler Verbrennung in dem Zylinder (3) erfolgt;
- Messen der Abgastemperatur (210) eines Zylinders in eingeschränktem Einspritzzustand, in dem das Abschalten des Hauptkraftstoffs in dem Zylinder ausgeführt wurde;
- Wiederherstellen der Kraftstoffeinspritzung (300) zu dem Zylinder in dem eingeschränkten Einspritzzustand, falls die gemessene Abgastemperatur innerhalb eines vorbestimmten Temperaturbereichs für den Zylinder in dem eingeschränkten Einspritzzustand liegt;
- Messen eines Brennzustands des Zylinders durch Messen der Abgastemperatur, des Zylinderdrucks oder eines anderen Signals, das den Verbrennungsprozess angibt; und
- erneutes Einstellen des Zylinders auf eingeschränkten Einspritzzustand durch Abschalten des Hauptkraftstoffs in dem Zylinder, falls keine Änderung des Brennzustands des Zylinders während einer gegebenen Zeitspanne erfasst wird.

2. Verfahren nach Anspruch 1, **dadurch gekennzeichnet, dass** das Wiederherstellen der Hauptkraftstoffeinspritzung (300) ausgeführt wird, falls die gemessene Abgastemperatur (210) während einer vorbestimmten Zeitspanne für eingeschränkten Einspritzzustand innerhalb eines Temperaturbereichs liegt.

3. Verfahren nach Anspruch 2, **dadurch gekennzeichnet, dass** die vorbestimmte Zeitspanne für eingeschränkten Einspritzzustand (330) von einer Anzahl von Versuchen der Wiederherstellung der Hauptkraftstoffeinspritzung abhängt.

4. Verfahren nach Anspruch 3, **dadurch gekennzeichnet, dass** die Anzahl von Versuchen der Wiederherstellung der Hauptkraftstoffeinspritzung eingeschränkt ist (320) .

## Revendications

1. Procédé de fonctionnement d'un moteur à combustion interne utilisant un carburant principal, ledit moteur (2) ayant une pluralité de cylindres (3) et un contrôleur de moteur (10) capable d'ajuster un état de combustion de chaque cylindre par la régulation du carburant, y compris la coupure du carburant, en cas de combustion anormale dans un cylindre (3), le procédé comprenant de:
- régler un cylindre dans un état d'injection restreint (200), où la coupure de carburant principal dans ledit cylindre (3) est effectuée, lors de l'apparition d'une combustion anormale dans ledit cylindre (3);
- mesurer la température des gaz d'échappement (210) d'un cylindre dans un état d'injection restreint, où la coupure du carburant principal dans ledit cylindre a été effectuée;
- rétablir l'injection de carburant principale (300) dans ledit cylindre dans un état d'injection restreint si la température mesurée des gaz d'échappement est dans la plage de températures prédéterminée pour ledit cylindre dans un état d'injection restreint;
- mesurer un état de combustion dudit cylindre en mesurant la température des gaz d'échappement, la pression du cylindre ou un autre signal indicatif du processus de combustion; et
- remettre le cylindre à l'état d'injection restreint en coupant l'injection de carburant principal dans ledit cylindre si aucun changement n'est détecté dans l'état de combustion dudit cylindre pendant une période de temps donnée.

2. Procédé selon la revendication 1, **caractérisé en ce que** la restauration de l'injection de carburant principale (300) est exécutée si la température mesurée des gaz d'échappement (210) est dans la plage de température pendant une période de temps prédéterminée pour l'état d'injection restreint.

3. Procédé selon la revendication 2, **caractérisé en ce que** la période de temps (330) prédéterminée pour l'état d'injection restreint dépend du nombre de tentatives de restauration de l'injection de carburant principale.

4. Procédé selon la revendication 3, **caractérisé en ce que** le nombre de tentatives de restauration de l'injection principale de carburant est limité (320).
